# EUROPEAN PATENT APPLICATION

(11) **EP 2 879 277 A2**
(43) Date of publication of application: **03.06.2015**
(21) Application number: 13197647.4
(22) Date of filing: 17.12.2013
(51) Int. Cl.: H02K 3/52

(54) **Concentrated type motor**

(30) Priority: 27.11.2013 KR 20130145600
(71) Applicant: Mando Corporation, Pyeongtaek-si, Gyeonggi-do (KR)
(72) Inventor: Cho, Seong Jong, Giheung-gu, Yongin-si Gyeonggi-do (KR); Kim, Ho Sik, 478-75, Amsa 1-dong, Gangdong-gu, Seoul (KR)
(74) Representative: Hirsch & Associés

(57) **Abstract**

Disclosed herein is concentrated type motor. The concentrated type motor includes a stator configured by a core, which is formed with slots between a plurality of T-shaped teeth radially protruding from a ring-shaped yoke having a predetermined curvature while the teeth are spaced at regular intervals, and coils wound around the plural teeth, and a rotor rotatably installed at a central portion of the stator while being spaced apart from the stator by a predetermined distance, wherein coil connection between the adjacent teeth is formed by a PCB busbar.

## Description

This application claims the benefit of Korean Patent Application No. 2013-0145600, filed on November 27, 2013 in the Korean Intellectual Property Office, the disclosure of which is incorporated herein by reference.

### BACKGROUND

### 1. Field

Embodiments of the present invention relate to a concentrated type motor, and more particularly, to connection of rectangular wire coils wound around a plurality of adjacent teeth.

### 2. Description of the Related Art

In general, a motor includes a stator and a rotor rotatably installed at a central portion of the stator while being spaced apart from the stator by a predetermined distance. The stator includes a core which is configured by a plurality of T-shaped teeth radially protruding from a ring-shaped yoke having a predetermined curvature while the teeth are spaced at regular intervals and slots formed between the teeth, and coils wound around the plural T-shaped teeth.

In addition, the motor is classified into a concentrated winding motor and a distributed winding motor according to a way in which the coils are wound around the T-shaped teeth. The concentrated winding is a way in which all coils are wound in one slot and the distributed winding is a way in which the coils are wound at regular intervals in the entirety of slots. The concentrated winding is suitable for low speed and high torque, compared to the distributed winding.

The distributed winding motor has a structure without a need for a separate coil connection, but the concentrated winding motor definitely needs a coil connection structure. In the concentrated winding, a busbar is used for connection between the coils of the adjacent T-shaped teeth. The busbar is a type of a clip and is used to sequentially connect output ends of the coils wound around the T-shaped teeth to input ends of other adjacent coils, respectively.

Meanwhile, the recently released motor adopts rectangular wires instead of round wires in order to obtain high output and compact size. The rectangular wires have excellent efficiency due to a high fill factor, but are not easy to be bent during winding thereof, compared to the round wires. Of course, the rectangular wires are connected using the busbar like the conventional method. However, in this case, since the rectangular wires are connected using the busbar and then have to be molded for insulation thereof, a manufacturing process is complicated and costs increase.

In addition, torsion is generated at the coils during connection thereof due to characteristics of the ring-shaped teeth, resulting in cut-off of the coils or generation of cracks. Thus, since coatings of the coils are peeled off and copper is exposed, manufacturing is not easy.

### SUMMARY

Therefore, it is an aspect of the present invention to provide a concentrated type motor allowing connection between coils to be easy.

Additional aspects of the invention will be set forth in part in the description which follows and, in part, will be obvious from the description, or may be learned by practice of the invention.

In accordance with one aspect of the present invention, a concentrated type motor includes a stator configured by a core, which is formed with slots between a plurality of T-shaped teeth radially protruding from a ring-shaped yoke having a predetermined curvature while the teeth are spaced at regular intervals, and coils wound around the plural teeth, and a rotor rotatably installed at a central portion of the stator while being spaced apart from the stator by a predetermined distance, wherein coil connection between the adjacent teeth is formed by a PCB busbar.

The PCB busbar may be provided in a ring shape, and a plurality of contacts, which are respectively connected to input ends and output ends of the coils wound around the plural teeth, may be provided along a circumference of the PCB busbar.

The plural contacts may be provided on an outer periphery of the PCB busbar, and input contacts connected to the input ends of the coils and output contacts connected to the output ends of the coils may be provided adjacent to each other.

The input contacts and the output contacts may be provided on the outer periphery of the PCB busbar.

The coils may include a U-phase coil, a V-phase coil, and a W-phase coil, and the U-phase, V-phase, and W-phase coils, and neutral points may be provided on the PCB busbar in a multi-layer form.

The PCB busbar may be configured by insulators and four layers including conductive lines provided on the insulators, and the conductive lines of the respective layers may allow the three-phase coils to be electrically connected to the neutral points, respectively.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view illustrating a concentrated type motor according to an embodiment of the present invention;
FIG. 2 is a top view of the concentrated type motor according to the embodiment of the present invention;
FIG. 3 is an exploded view illustrating one tooth and a PCB busbar of the concentrated type motor according to the embodiment of the present invention;
FIGS. 4 (a) to 4 (c) are views illustrating connection of three-phase coils provided in the PCB busbar of the concentrated type motor according to the embodiment of the present invention;
FIG. 5 is a cross-sectional view illustrating the PCB busbar of the concentrated type motor according to the embodiment of the present invention; and
FIG. 6 is a view illustrating a PCB busbar of a concentrated type motor according to another embodiment of the present invention.

### DETAILED DESCRIPTION

Reference will now be made in detail to the embodiments of the present invention, examples of which are illustrated in the accompanying drawings, wherein like reference numerals refer to like elements throughout. Prior to this, the terms and words used in the specification and claims should not be construed as their ordinary or dictionary sense. On the basis of the principle that the inventor can define the appropriate concept of the term in order to describe his/her own invention in the best way, it should be construed as meaning and concepts for complying with the technical idea of the present invention. Accordingly, the embodiments described in the present specification and the construction shown in the drawings are nothing but one preferred embodiment of the present invention, and it does not cover all the technical ideas of the invention. Thus, it should be understood that various changes and modifications may be made at the time of filing the present application.

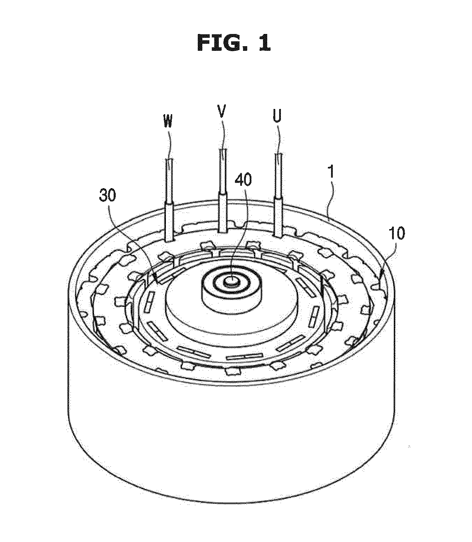

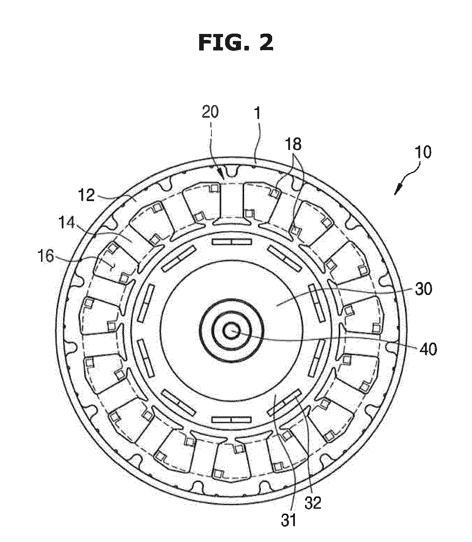

FIG. 1 is a perspective view illustrating a concentrated type motor according to an embodiment of the present invention, and FIG. 2 is a top view of FIG. 1.

Referring to the drawings, a concentrated type motor according to an embodiment of the present invention includes a motor casing 1 defining an external appearance thereof, a stator 10 disposed inside the motor casing 1, a ring-shaped rotor 30 which is provided within the stator 10 and is rotated by electromagnetic interaction with the stator 10, and a shaft 40 installed at a center of the rotor 30.

As shown in FIG. 2, the stator 10 includes a ring-shaped yoke 12 having a predetermined curvature, a plurality of T-shaped teeth 14 radially protruding from the yoke 12 while being spaced at regular intervals, slots 16 formed between the teeth 14, and coils 18 wound around the teeth 14.

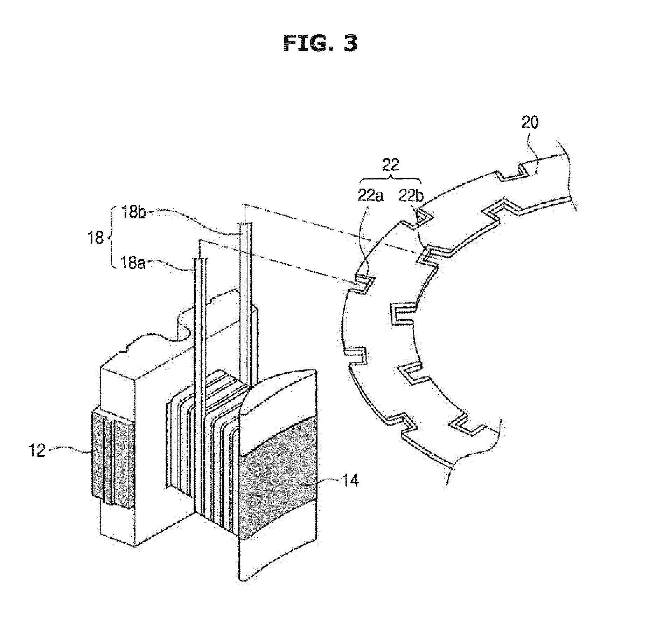

The yoke 12 is a structure formed by stacking a plurality of pieces of iron to serve as a passage of magnetic flux. Although the motor is illustratively disclosed as being provided with fifteen slots in the present embodiment, the present invention is not limited thereto. For example, six slots, nine slots, and the like are also applicable to the present invention. In addition, in the present embodiment, a single core is provided by integrally forming an arc-shaped yoke 12 and a tooth 14 and a plurality of cores is provided in the same number as that of required slots so that the stator is provide by assembling the plural cores in a ring shape on a jig (not shown), as shown in FIG. 3.

The coils 18 are formed of wires each of which is rectangular or other linear in cross-section having a high SFR (Slot Fill Ratio) or fill factor. The SFR is to compare a total cross-sectional area of copper conductors exposed within one slot with a cross-sectional area of the slot itself. The high cross-sectional area of each conductor within the slot allows conductor resistance and phase resistance (namely, power loss) to be reduced with respect to a given size of the slot. Accordingly, when an electric device has a high SFR, that is, when a conductor wire has a rectangular cross-section rather than a circular cross-section, efficiency of the electric device is improved.

The coils 18 use insulation-coated wires, and are configured of three-phase (U-phase, V-phase, and W-phase) coils for generation of a rotating magnetic field. The three-phase coils 18 are arranged to have a phase difference of 120° When current is selectively applied to the coils of respective phases through a switching device (not shown), the rotor 30 is rotated by magnetic force acting between the selectively magnetized teeth 14 and poles of permanent magnets 32 included in the rotor 30.

The coil 18 wound around each tooth 14 is connected to a coil of a tooth adjacent to the tooth 14 by a PCB busbar 20. As shown in FIG. 3, the coil 18 wound around each tooth 14 has an input end 18a and an output end 18b.

The PCB busbar 20 is formed in a ring shape, and is provided, at an outer periphery thereof, with a plurality of contacts 22 which are respectively connected to the input ends 18a and the output ends 18b of the coils 18. The contacts 22 include input contacts 22a provided on the outer periphery of the PCB busbar 20 and output contacts 22b provided on an inner periphery thereof. The contacts 22 and coils 18 may be electrically connected to each other by various coupling method such as soldering and one-touch terminals.

In addition, the PCB busbar 20 is configured of multi-layer PCBs including a plurality of conductive lines to respectively connect three phases.

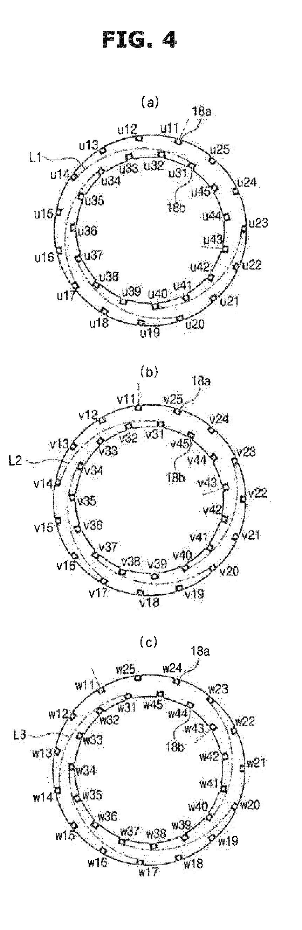

FIGS. 4 (a) to 4 (c) show each layer of the PCB busbar 20. FIG. 4 (a) shows a U-phase coil connection state of a first layer, FIG. 4 (b) shows a V-phase coil connection state of a second layer, and FIG. 4 (c) shows a W-phase coil connection state of a third layer. Each phase coil has the same connection method, except that a beginning contact and an ending contact (neutral point) of each phase coil are different from those of the other phase coils by a phase difference. Therefore, the U-phase coil will be illustratively described.

In the U-phase coil, the input end 18a of the coil 18 is connected at U11 and the output end 18b of the coil 18 is connected at U31. The U-phase coil is connected from U31 to U14 through a first conductive line L1 and is then connected from U14 to U34. Subsequently, the U-phase coil is connected from U34 to U17, from U37 to U20, from U40 to U23, and U43 is a final neutral point.

Similarly, the V-phase coil and the W-phase coil are connected by the same method as that of the U-phase coil, except that only beginning points of the V-phase coil and the W-phase coil are different from the beginning point of the U-phase coil. The V-phase coil and the W-phase coil are respectively connected to neutral points V43 and W43 through a second conductive line L2 and a third conductive line L3. The three-phase coils are connected at the neutral points U43, V43, and W43 through a fourth conductive line L4.

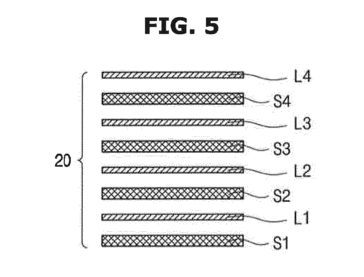

FIG. 5 is a cross-sectional view illustrating the PCB busbar. The PCB busbar is provided by stacking the U-phase first conductive line L1 formed on a first layer over an insulator S1, the V-phase second conductive line L2 formed on a second layer over an insulator S2, the W-phase third conductive line L3 formed on a third layer over an insulator S3, and the fourth conductive line L4, which connects the three-phase neutral points U43, V43, and W43, formed on a fourth layer over an insulator S4. When higher output current is required, it may be possible to easily realize high output together with having compact size by increasing the number of conductive layers formed with the conductive lines while decreasing an insulation layer height of the PCB busbar without an increase in height thereof.

Meanwhile, the rotor 30 has a ring-shaped back yoke 31 disposed inside the stator 10 such that a gap having a predetermined size is formed between the stator 10 and the rotor 30, and a structure of alternately mounting the permanent magnets, each of which has an N-pole and an S-pole, on an outer peripheral surface of the back yoke. The rotary shaft 40 is coupled to a center of the back yoke 31.

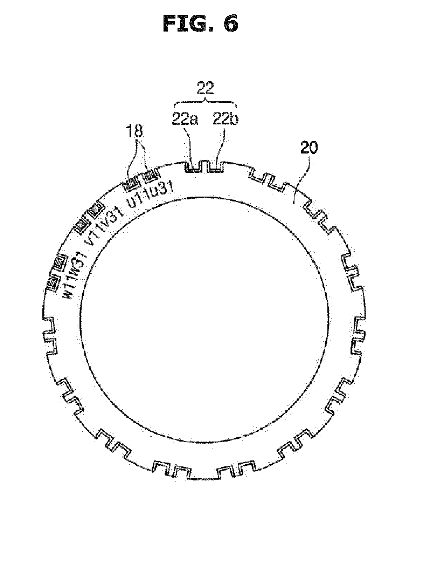

FIG. 6 is a view illustrating a PCB busbar of a concentrated type motor according to another embodiment of the present invention. The PCB busbar of the present embodiment is different from that of the above-mentioned embodiment in that the output contacts 22b connected to the output ends 18b of the coils are arranged close to the input contacts 22a on the outer periphery instead of the inner periphery. Such an arrangement varies according to a winding method of the coil. When the input and output ends of the coil are equal to each other, assembly of the stator may be more easily realized.

In addition, although a connection method of the concentrated type motor is not specifically described in the present embodiments, both a Y-connection method and a Delta-connection method may be typically used. As an example, two methods may be selectively adopted through variation and medication of a PCB circuit pattern.

As is apparent from the above description, in a concentrated type motor according to an embodiment of the present invention, coils are connected using a PCB busbar formed of multiple layers. Accordingly, since torsion of the coils is not generated and connection between contacts is simple, connection of the coils is easy.

In addition, since the concentrated type motor according to the embodiment of the present invention uses rectangular wires, it may be possible to further enhance efficiency of the motor. Furthermore, since, when high current is required, this may be solved by increasing only the number of layers of the PCB busbar without an increase in height thereof, it may be possible to realize high output together with having compact size.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A concentrated type motor including a stator configured by a core, which is formed with slots between a plurality of T-shaped teeth radially protruding from a ring-shaped yoke having a predetermined curvature while the teeth are spaced at regular intervals, and coils wound around the plural teeth, and a rotor rotatably installed at a central portion of the stator while being spaced apart from the stator by a predetermined distance,
wherein coil connection between the adjacent teeth is formed by a PCB busbar.

2. The concentrated type motor according to claim 1, wherein:
the PCB busbar is provided in a ring shape; and
a plurality of contacts, which are respectively connected to input ends and output ends of the coils wound around the plural teeth, are provided along a circumference of the PCB busbar.

3. The concentrated type motor according to claim 2, wherein:
the plural contacts are provided on an outer periphery of the PCB busbar; and
input contacts connected to the input ends of the coils and output contacts connected to the output ends of the coils are provided adjacent to each other.

4. The concentrated type motor according to claim 3, wherein the input contacts and the output contacts are provided on the outer periphery of the PCB busbar.

5. The concentrated type motor according to any one of claims 1 to 4, wherein:
the coils comprises a U-phase coil, a V-phase coil, and a W-phase coil; and
the U-phase, V-phase, and W-phase coils, and neutral points are provided on the PCB busbar in a multi-layer form.

6. The concentrated type motor according to claim 5, wherein:
the PCB busbar is configured by insulators and four layers comprising conductive lines provided on the insulators; and
the conductive lines of the respective layers allows the three-phase coils to be electrically connected to the neutral points, respectively.
